# EUROPÄISCHE PATENTSCHRIFT

(11) **EP 1 248 920 B1**
(45) Veröffentlichungstag und Bekanntmachung des Hinweises auf die Patenterteilung: **27.08.2003**
(21) Anmeldenummer: 01900442.3
(22) Anmeldetag: 13.01.2001
(51) Int. Cl.: F16H 47/04, F16H 47/02

(54) **LEISTUNGSVERZWEIGUNGSGETRIEBE**
POWER-SPLITTING GEARBOX
MECANISME DE DERIVATION DE PUISSANCE

(30) Priorität: 19.01.2000 DE 10001915
(43) Veröffentlichungstag der Anmeldung: 16.10.2002
(73) Patentinhaber: ZF FRIEDRICHSHAFEN Aktiengesellschaft, 88038 Friedrichshafen (DE)
(72) Erfinder: BAUR, Erwin, 88046 Friedrichshafen (DE); POHLENZ, Jürgen, 88214 Ravensburg (DE)
(86) Internationale Anmeldenummer: EP0100375
(87) Internationale Veröffentlichungsnummer: WO01053722

(56) Entgegenhaltungen:
- DE-A- 4 441 085
- DE-A- 19 856 544
- GB-A- 1 259 289
- US-A- 5 683 322

## Beschreibung

Die Erfindung betrifft ein Leistungsverzweigungsgetriebe nach der im Oberbegriff von Anspruch 1 näher definierten Art.

Leistungsverzweigungsgetriebe werden zum Antrieb von Mobilfahrzeugen, wie z. B. landwirtschaftlichen Fahrzeugen, verwendet, wobei ein hydraulischer Leistungszweig mit einem mechanischen Leistungszweig aufsummiert wird und das Fahrzeug antreibt. Leistungsverzweigungsgetriebe mit einem hydraulischen und einem mechanischen Leistungszweig benötigen eine Speisepumpe, welche Druckflüssigkeit aus einem Reservoir saugt, und den hydraulischen Leistungszweig, die Betätigungseinrichtungen für den mechanischen Leistungszweig und Zuführungen zur Kühlung und Schmierung der Bauteile im Getriebe mit Druckmittel versorgt.

Die gattungsgemäße DE 198 56 544 A1 offenbart ein Leistungsverzweigungsgetriebe mit einem hydraulischen Leistungszweig und einem mechanischen Leistungszweig, wobei eine Speisepumpe Druckmittel aus einem Ölreservoir saugt und somit Druckmittel dem hydraulischen Leistungszweig, den Betätigungseinrichtungen des mechanischen Leistungszweigs und Zuführungen zur Kühlung und Schmierung der Bauteile im Getriebe zuführt. Das Druckmittel, welches dem hydraulischen Leistungszweig zugeführt wird, dient ausschließlich dem Ausgleich der Leckage des geschlossenen Kreises des hydraulischen Leistungszweiges. Durch diese Anordnung kann es vorkommen, daß beim Betrieb des Leistungsverzweigungsgetriebes in einem Betriebspunkt, bei welchem ein Großteil der Leistung über den hydraulischen Leistungszweig fließt, dieser infolge mangelnder Kühlung überhitzt wird.

Aufgabe der vorliegenden Erfindung ist es, ein Leistungsverzweigungsgetriebe zu schaffen, bei welchem der hydraulische Leistungszweig ausreichend gekühlt wird und die Bauteile des Getriebes ausreichend geschmiert sind, ohne daß der Wirkungsgrad des Leistungsverzweigungsgetriebes sich verschlechtert.

Die Aufgabe wird mit einem, auch die kennzeichnenden Merkmale des Hauptanspruchs aufweisenden, gattungsgemäßen Leistungsverzweigungsgetriebe gelöst.

Erfindungsgemäß wird dem hydraulischen Leistungszweig Druckflüssigkeit, welche von der Speisepumpe gefördert wird, zusätzlich zum Ausgleich der Leckage des hydraulischen Leistungszweiges eingespeist, mit dieser Druckflüssigkeit wird der hydraulische Leistungszweig gekühlt und anschließend die erwärmte Druckflüssigkeit wieder ausgespeist und der Zuführung zur Schmierung der Bauteile des Getriebes zugeführt. Indem das dem hydraulischen Leistungszweig wieder ausgespeiste Druckmittel zur Schmierung der Bauteile des Getriebes verwendet wird, ist es nicht notwendig, die Speisepumpe in ihrem Fördervolumen zu vergrößern, wodurch der Wirkungsgrad des Leistungsverzweigungsgetriebes sich nicht verschlechtert. Vorzugsweise wird das aus dem hydraulischen Leistungszweig ausgespeiste Druckmittel so dem Druckmittel, welches zur Schmierung der Bauteile des Getriebes verwendet wird, zugeführt, daß der gesamte Druckmittelstrom durch einen Kühler gekühlt wird und anschließend die Bauteile des Getriebes schmiert. Vorzugsweise ist dem Kühler ein Filter vorgeschaltet, wodurch das Druckmittel gefiltert und gekühlt wird. Eine Ausführung ohne diesen Filter ist ebenfalls möglich. Parallel zum Filter und Kühler ist ein Ventil angeordnet, welches oberhalb eines bestimmten Druckniveaus das Druckmittel direkt zu der Zuführung zur Schmierung der Bauteile des Getriebes weiterleitet. Somit ist gewährleistet, daß der Filter und der Kühler auch bei höherer Viskosität des Druckmittels und/oder bei starker Verschmutzung des Filters nicht unzulässig mit Druck beaufschlagt wird. Dies hat auch den Vorteil, daß bei größerem Kühlerwiderstand genügend Öl aus dem hydraulischen Leistungszweig ausgespült und somit damit auch in diesem Betriebszustand ausreichend gekühlt wird. Es besteht jedoch auch die Möglichkeit, den vom hydraulischen Leistungszweig wieder ausgespeisten Druckmittelstrom nach dem Kühler zuzuführen, wodurch sich gekühltes Druckmittel mit dem erwärmten Druckmittel vermengt und anschließend dem Getriebe zur Schmierung zugeführt wird. Dies hat den Vorteil, daß bei hohem Kühlergegendruck ausreichende Ausspülung und somit Kühlung vorhanden ist. Vorzugsweise besteht der hydraulische Leistungszweig aus einer hydraulischen Pumpe und einem hydraulischen Motor, welche über Verbindungsleitungen in einem geschlossenen Kreislauf verbunden sind, und bei welchem die Speisepumpe Druckmittel in die Verbindungsleitung zwischen hydraulischem Motor und hydraulischer Pumpe, welche das niedrigere Druckniveau aufweist, einspeist, dieses Druckmittel die Pumpe durchströmt, nach Verlassen der Pumpe in der das höhere Druckniveau aufweisenden Leitung dem hydraulischen Motor zugeführt wird, den hydraulischen Motor durchströmt und anschließend in der Verbindungsleitung vom hydraulischen Motor zur hydraulischen Pumpe, welche wiederum das niedrigere Druckniveau aufweist, ausgespeist und anschließend wieder dem Schmiermittelstrom zugeführt wird. Je nach Betriebszustand des Leistungsverzweigungsgetriebes wird die hydraulische Pumpe auch als hydraulischer Motor und der hydraulische Motor als hydraulische Pumpe verwendet. In diesem Fall durchströmt das eingespeiste Druckmittel den hydraulischen Leistungszweig in entgegengesetzter Richtung. Somit ist gewährleistet, daß der hydraulische Leistungszweig immer ausreichend gekühlt wird und zur Schmierung des Getriebes ausreichend Schmiermittel vorhanden ist. Um zu verhindern, daß das Druckniveau im hydraulischen Leistungszweig und somit auch für die Betätigungseinrichtung für den mechanischen Leistungszweig unter ein definiertes Druckniveau absinkt, wird nur oberhalb eines definierten Druckniveaus Druckmittel aus dem geschlossenen Kreislauf ausgespeist.

Weitere Merkmale sind der Figuren-Beschreibung zu entnehmen.
Es zeigen:

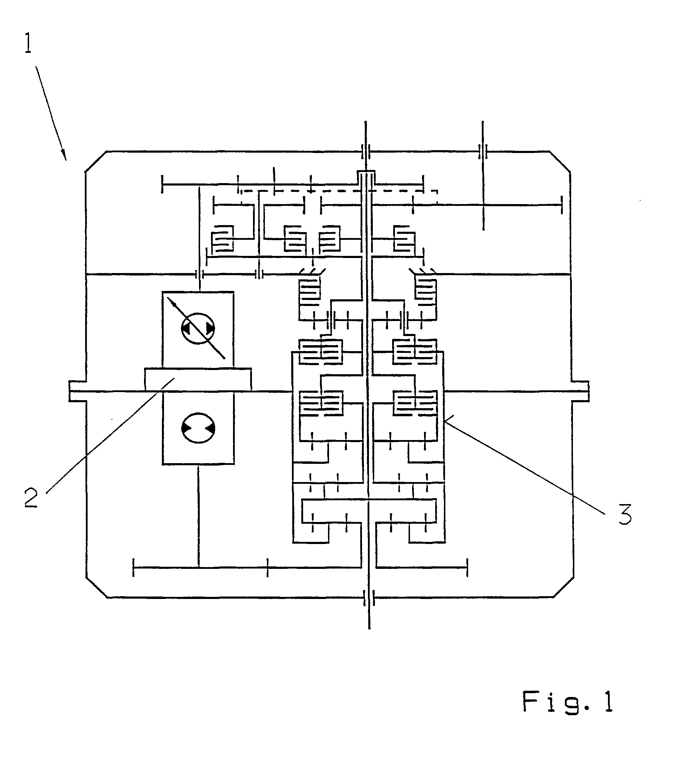

- Fig. 1: ein Leistungsverzweigungsgetriebe mit einem hydraulischen und einem mechanischen Leistungszweig und

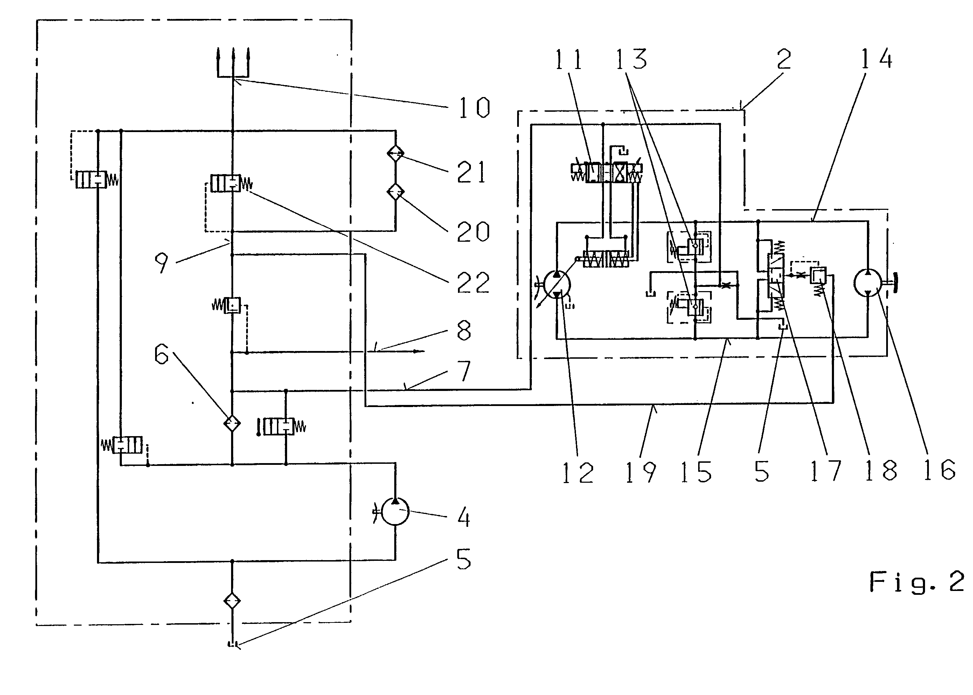

- Fig. 2: einen Teil eines Hydraulikschemas eines Leistungsverzweigungsgetriebes.

Fig. 1:
   Bei einem Leistungsverzweigungsgetriebe 1 wird ein hydraulischer Leistungszweig 2 mit einem mechanischen Leistungszweig 3 aufsummiert.
Fig. 2:
   Eine Speisepumpe 4 fördert Druckmittel aus einem Druckmittelreservoir 5 durch einen Filter 6 über eine Leitung 7 zu dem hydraulischen Leistungszweig 2. Gleichzeitig fördert die Speisepumpe 4 Druckmittel über einen Filter 6 über eine Leitung 8 zu den nicht dargestellten Betätigungseinrichtungen des mechanischen Leistungszweiges und über eine Leitung 9 zu Zuführungen zur Schmierung der Bauteile des Getriebes 10. Das Druckmittel gelangt über die Leitung 7 einerseits zu einer Verstelleinrichtung 11, mit welcher die hydraulische Pumpe 12 in ihrem Fördervolumen verstellt werden kann und zu Einspeiseventilen 13, über welche das Druckmittel in diejenige Verbindungsleitung 14 oder 15 zwischen der hydraulischen Pumpe 12 und dem hydraulischen Motor 16 eingespeist wird, welche das niedrigere Druckniveau aufweist. Je nach Betriebszustand wird die hydraulische Pumpe 12 und der hydraulische Motor 16 als Pumpe oder Motor betrieben. Das Druckmittel gelangt dann vom Einspeiseventil 13 über die Verbindungsleitungen 14 oder 15 in die Pumpe 12 oder den Motor 16 und wird über die Verbindungsleitung 14 oder 15, welche das höhere Druckniveau aufweist, zum Motor 16 oder der Pumpe 12 gefördert. Nach Durchströmen des Motors 16 oder der Pumpe 12 wird das Druckmmittel aus der Verbindungsleitung 14 oder 15 mit dem niedrigeren Druckniveau über den Spülschieber 17 und das Spülventil 18, welches eine Blende beinhaltet, in die Leitung 19 ausgespeist. Unterhalb eines definierten Druckniveaus schließt das Ventil 18, um kein Druckmittel aus dem hydraulischen Leistungszweig 2 auszuspeisen und somit die Funktion des Getriebes zu gewährleisten. Von der Leitung 19 wird das Druckmittel zu dem in der Leitung 9 befindlichen Druckmittel gefördert und mit diesem vermengt. Unterhalb eines bestimmten Druckniveaus strömt das Druckmittel aus der Leitung 9 durch einen Filter 20 und einen Kühler 21 zu den Zuführungen zur Schmierung der Bauteile des Getriebes 10. Oberhalb eines definierten Druckniveaus öffnet das Ventil 22, wodurch das Druckmittel der Leitung 9 direkt zu den Zuführungen zur Schmierung der Bauteile des Getriebes 10 gefördert wird. Somit ist gewährleistet, daß der hydraulische Leistungszweig ausreichend gekühlt wird und die Speisepumpe in ihrem Fördervolumen nicht vergrößert werden muß, wodurch der Wirkungsgrad des Leistungsverzweigungsgetriebes unverändert verbleibt.

### Bezugszeichen

- 1: Leistungsverzweigungsgetriebe
- 2: hydraulischer Leistungszweig
- 3: mechanischer Leistungzweig
- 4: Speisepumpe
- 5: Druckmittelreservoir
- 6: Filter
- 7: Leitung
- 8: Leitung
- 9: Leitung
- 10: Zuführungen
- 11: Verstelleinrichtung
- 12: Pumpe
- 13: Einspeiseventil
- 14: Verbindungsleitung
- 15: Verbindungsleitung
- 16: Motor
- 17: Spülschieber
- 18: Spülventil
- 19: Leitung
- 20: Filter
- 21: Kühler
- 22: Ventil

## Patentansprüche

1. Leistungsverzweigungsgetriebe mit einem mechanischen Leistungszweig (3) und einem hydraulischen Leistungszweig (2), bei welchem eine Speisepumpe (4) Druckflüssigkeit zum hydraulischen Leistungszweig (2), zu den Betätigungseinrichtungen des mechanischen Leistungszweiges und zur Schmierung von Bauteilen des Getriebes (10) fördert, wobei die Druckflüssigkeit, welche zum hydraulischen Leistungszweig (2) gefördert wird, in einen geschlossenen Kreislauf zwischen einer hydraulischen Pumpe (12) und einem hydraulischen Motor (16) eingespeist wird, **dadurch gekennzeichnet, daß** diese Druckflüssigkeit den geschlossenen Kreislauf kühlt und anschließend aus dem geschlossenen Kreislauf über einen Spülschieber (17) und ein Spülventil (18) ausgespeist wird und dem Druckmittelstrom zur Schmierung von Bauteilen des Getriebes (10) zugeführt wird, wobei unterhalb eines definierten Druckniveaus das Spülventil (18) schließt, um kein Duckmittel aus dem geschlossenen Kreislauf auszuspeisen.

2. Leistungsverzweigungsgetriebe nach Anspruch 1, **dadurch gekennzeichnet , daß** der Druckmittelstrom, welcher aus dem geschlossenen Kreislauf ausgespeist wird, vor einer Zuführung zu den Bauteilen des Getriebes (10) durch einen Kühler (21) gekühlt wird.

3. Leistungsverzweigungsgetriebe nach Anspruch 2, **dadurch gekennzeichnet, daß** der Kühler (21) zwischen dem Spülventil (18) und der Zuführung zu den Bauteilen des Getriebes (10) angeordnet ist.

4. Leistungsverzweigungsgetriebe nach Anspruch 1, **dadurch gekennzeichnet, daß** der Druckmittelstrom von der Speisepumpe (4) in eine den geringeren Druck aufweisende Verbindungsleitung (14, 15) zwischen hydraulischer Pumpe (12) und hydraulischem Motor (16) eingespeist wird, die hydraulische Pumpe (12) durchströmt, über die den höheren Druck aufweisende Verbindungsleitung (14, 15) zwischen der hydraulischen Pumpe (12) und dem hydraulischen Motor (16) zum hydraulischen Motor (16) gefördert wird und nach Durchströmen des hydraulischen Motors (16) aus der den niedrigeren Druck aufweisenden Verbindungsleitung (14, 15) zwischen hydraulischer Pumpe (12) und hydraulischem Motor (16) ausgespeist wird.

5. Leistungsverzweigungsgetriebe nach Anspruch 1, **dadurch gekennzeichnet, daß** vor der Zuführung zu den Bauteilen des Getriebes (10) eine Filtereinheit (20) und ein Kühler (21) angeordnet sind.

6. Leistungsverzweigungsgetriebe nach Anspruch 5, **dadurch gekennzeichnet , daß** oberhalb eines definierten Druckniveaus zumindest ein Teil des Druckmittelstroms von der Speisepumpe (4) direkt zu der Zuführung zu den Bauteilen des Getriebes (10) gelangt.

## Claims

1. The invention relates to a power split transmission comprising a mechanical power branch (3) and a hydraulic power branch (2), with a feed pump (4) supplying hydraulic fluid to the hydraulic power branch (2), to the control devices of the mechanical power branch and for the lubrication of the components of the transmission (10), with the hydraulic fluid, which is supplied to the hydraulic power branch (2), being fed to a closed circuit between a hydraulic pump (12) and a hydraulic motor (16), **characterized in that** this hydraulic fluid cools the closed circuit before it is discharged from the closed circuit via a scouring slide valve (17) and a scavenging valve (18) and fed to the hydraulic fluid flow for the lubrication of components of the transmission (10), with the scavenging valve (18) closing at a level below a defined pressure level so that no hydraulic fluid is discharged from the closed circuit.

2. Power split transmission according to claim 1, **characterized in that** the hydraulic fluid discharged from the closed circuit is cooled by a cooler (21) before it is fed to the components of the transmission (10).

3. Power split transmission according to claim 2, **characterized in that** the cooler (21) is arranged between the scavenging valve (18) and the system feeding the components of the transmission (10).

4. Power split transmission according to claim 1, **characterized in that** the hydraulic fluid is fed to a lower-pressure connecting line (14, 15) between hydraulic pump (12) and hydraulic motor (16), passes through the hydraulic pump (12), is fed to the hydraulic motor (16) via the higher-pressure connecting line (14, 15) between the hydraulic pump (12) and the hydraulic motor (16) and after passing through the hydraulic motor (16) is discharged from the lower-pressure connecting line (14, 15) between hydraulic pump (12) and hydraulic motor (16).

5. Power split transmission according to claim 1, **characterized in that** a filter unit (20) and a cooler (21) are arranged upstream of the system feeding the components of the transmission (10).

6. Power split transmission according to claim 5, **characterized in that** above a defined pressure level at least some of the hydraulic fluid from the feed pump (4) will directly reach the system feeding the components of the transmission (10).

## Revendications

1. Transmission à ramification de puissance comprenant une branche de puissance mécanique (3) et une branche de puissance hydraulique (2) dans laquelle une pompe d'alimentation (4) refoule un liquide sous pression vers la branche de puissance hydraulique (2) vers les dispositifs d'actionnement de la branche de puissance mécanique et vers la lubrification d'organes de la transmission (10), le liquide sous pression qui est refoulé vers la branche de puissance hydraulique (2) étant injecté dans un circuit fermé entre une pompe hydraulique (12) et un moteur hydraulique (16), **caractérisée en ce que** ce liquide sous pression refroidit le circuit fermé, puis est extrait du circuit fermé en passant par un tiroir de décharge (17) et une soupape de décharge (18) et est envoyé au flux de milieu sous pression refoulé vers la lubrification d'organes de la transmission (10), la soupape de décharge (18) se fermant au-dessous d'un niveau de pression défini pour ne pas extraire de milieu de pression du circuit fermé.

2. Transmission à ramification de puissance selon la revendication 1, **caractérisée en ce que** le flux de milieu sous pression qui est extrait du circuit fermé est refroidi par un radiateur (21) avant d'être acheminé aux organes de la transmission (10).

3. Transmission à ramification de puissance selon la revendication 2, **caractérisée en ce que** le radiateur (21) est disposé entre la soupape de décharge (18) et l'acheminement aux organes de la transmission (10).

4. Transmission à ramification de puissance selon la revendication 1, **caractérisée en ce que** le flux de milieu sous pression est injecté par la pompe d'alimentation (4) dans une conduite de liaison (14, 15) entre la pompe hydraulique (12) et le moteur hydraulique (16) qui présente la plus basse pression, traverse la pompe hydraulique (12), est refoulé vers le moteur hydraulique (16) en passant par la conduite de liaison (14, 15) entre la pompe hydraulique (12) et le moteur hydraulique (16) qui présente la plus haute pression, et, après avoir traversé le moteur hydraulique (16), est extrait de la conduite de liaison (14, 15) entre la pompe hydraulique (12) et le moteur hydraulique (16) qui présente la plus basse pression.

5. Transmission à ramification de puissance selon la revendication 1, **caractérisée en ce qu'**une unité de filtre (20) et un radiateur (21) sont disposés en amont de l'acheminement aux organes de la transmission (10).

6. Transmission à ramification de puissance selon la revendication 5, **caractérisée en ce qu'**au-dessus d'un niveau de pression défini, au moins une partie du flux de milieu sous pression parvient directement de la pompe d'alimentation (4) à l'acheminement aux organes de la transmission (10).
